# EUROPÄISCHE PATENTSCHRIFT

(11) **EP 1 297 606 B1**
(45) Veröffentlichungstag und Bekanntmachung des Hinweises auf die Patenterteilung: **07.04.2004**
(21) Anmeldenummer: 00940100.1
(22) Anmeldetag: 23.06.2000
(51) Int. Cl.: H02K 3/40, H02K 15/12

(54) **TEILENTLADUNGSFESTE ISOLIERUNG FÜR ELEKTRISCHE LEITER**
INSULATION FOR ELECTRICAL CONDUCTORS THAT PRODUCES NO PARTIAL DISCHARGES
ISOLATION RESISTANT AUX DECHARGES PARTIELLES DESTINEE A DES CONDUCTEURS ELECTRIQUES

(43) Veröffentlichungstag der Anmeldung: 02.04.2003
(73) Patentinhaber: Von Roll Isola Winding Systems GmbH, 04720 Döbeln (DE)
(72) Erfinder: BRANDES, Heinz, D-79650 Schopfheim (DE); HILLMER, Thomas, CH-4226 Breitenbach (CH); REDIGER, Jean-Luc, F-68300 Saint-Louis (FR); JUND, François, F-68560 Hirsingue (FR); HÄNGGI, Franz, CH-4234 Zullwil (CH); FERNANDEZ, José, CH-4226 Breitenbach (CH)
(74) Vertreter: Zimmermann, Hans, Dr.
(86) Internationale Anmeldenummer: PCT/CH2000/000345
(87) Internationale Veröffentlichungsnummer: WO 2001/099255

(56) Entgegenhaltungen:
- EP-A- 0 088 261
- DE-B- 1 156 171
- FR-A- 2 230 110
- PATENT ABSTRACTS OF JAPAN vol. 014, no. 198 (M-0965), 23. April 1990 (1990-04-23) & JP 02 039916 A (TOSHIBA CORP;OTHERS: 01), 8. Februar 1990 (1990-02-08)

## Beschreibung

Die Erfindung betrifft ein Verfahren zum teilentladungsfesten Isolieren eines elektrischen Leiters für elektrotechnische Anwendungen sowie dadurch erhältliche teilentladungsfeste Isolierungen und Leiter für Wicklungen von elektrischen Maschinen und Umformern.

Ein derartiges Verfahren ist aus dem Dokumenten FR-A-2 230 110 und JP-A-02 039 916 bereits bekannt.

Elektrische Maschinen in Hochspannungsausführung werden üblicherweise mit Wicklungen aus Formspulen mit Flachdrähten (auch Profildrähte genannt) ausgeführt (vgl. Sequenz H.: Herstellung der Wicklungen elektrischer Maschinen, Wien, Springer-Verlag 1973 ab Seite 107). Eine teilentladungsfeste Isolierung für Wicklungen solcher Maschinen ist beispielsweise in DE-AS 10 56 722 beschrieben, wo die Lackprofildrähte mit einer Umbandelung aus glimmerhaltigen Isolierstoffbändern versehen und die Wicklungen mit Imprägniermitteln nach dem Vakuumimprägnierverfahren getränkt und ausgehärtet wurden. Um isolierte Formspulen aus Profildrähten in Blechpakete einfügen zu können, ist es jedoch erforderlich, in den Bleckpaketen offene Nuten anzuordnen, was sich nachteilig auf das Betriebsverhalten auswirkt, bzw.es erforderlich macht, die Nuten aufwendig mit magnetischen Nutverschlüssen zu verschliessen, um diese Nachteile zu vermeiden. Zudem ist die Herstellung von Formspulenwicklungen mit Flachdrähten arbeitsintensiv und bedingt einen hohen technologischen Aufwand.

Um diese Nachteile zu vermeiden, wurde in DE-A1-198 03 308 vorgeschlagen, in halboffenen Nuten des Blechpakets eine Nutauskleidung aus einem glimmerhaltigen Flächenisolierstoff anzuordnen, in die Nuten eine Runddraht-Träufelwicklung eines mit Folienglimmerband ein- oder mehrlagig überlappt umbandelten Wicklungsdrahtes einzulegen und jede jeweils in zwei Nuten liegende Spule in mindestens zwei übereinanderliegende, hintereinandergeschaltete und gegeneinander durch Zwischenlagen isolierte Teilspulen aufzulösen. Unter halboffenen bzw. halbgeschlossenen Nuten werden dabei Nuten mit einem Nutschlitz verstanden, dessen Breite wesentlich kleiner als die Nutbreite ist, womit der Aufwand zur Einbringung magnetischer Nutverschlüsse entfällt.

Es ist andererseits bekannt, dass mit dem Einsatz gepulster Spannungswechselrichter zur Drehzahlstellung das als gelöst angesehene Problem der Ausfälle von Drehstrommaschinen durch Windungs- oder Phasenschluss in einzelnen Anwendungssituationen wieder aufgetreten ist. Um solche Ausfälle zu vermeiden, wurden Grenzwerte der Wicklungsbeanspruchung empfohlen (z.B. in der Fachzeitschrift EMA Heft 3/96), wobei aber dennoch mit einer Verringerung der Lebensdauer der elektrischen Maschine zu rechnen oder die Installation zusätzlicher Anlagekomponenten (z.B. Filter) notwendig ist.

In EP-A1-0 822 640 wurde daher eine teilentladungsfeste Niederspannungsisolierung für Wicklungen elektrischer Maschinen, insbesondere für frequenzumrichtergespeiste Drehstrommotoren, vorgeschlagen, die dadurch gekennzeichnet ist, dass die Wicklung aus an sich bekannten Lackdrähten besteht, dass diese Lackdrähte mit einer Umbandelung aus glimmerhaltigen Isolierstoffbändern versehen sind, dass die Nut mit Flächenisolierstoffen hoher Wärmebeständigkeit ausgekleidet ist, dass die Zahl paralleler Drähte und paralleler Zweige minimiert ist und dass die Wicklungen mit Imprägniermitteln nach dem Strom-UV-Verfahren oder dem Vakuumimprägnierverfahren getränkt und ausgehärtet sind. Durch die Minimierung paralleler Zweige und/oder Leiter soll der Erhöhung des Platzbedarfes durch die zusätzlich eingebrachte Umbandelung entgegengewirkt werden.

Es ist heute üblich, Niederspannungsmaschinen an Frequenzumrichtern mit hohen Taktfrequenzen von bis zu 20000 Hz zu betreiben. Die Problematik liegt hierbei im Auftreten von Teilentladungen zwischen benachbarten Leitern, verursacht durch die steilen Spannungsflanken der Umrichterspannung. Im ungünstigsten Fall kommt es dabei zu Überspannungen, die mehr als den doppelten Wert der Zwischenkreisspannung erreichen können. Da Teilentladungen zur Zerstörung der Lackisolierungen herkömmlicher Wicklungsdrähte führen und es dadurch zum elektrischen Durchschlag kommen kann, ist der Einsatz von Lackdrähten in umrichterbetriebenen Motoren bei Netzspannungen über 400 V problematisch.

Überraschenderweise wurde gefunden, dass die Isolierung elektrischer Leiter in verschiedener Hinsicht erheblich verbessert werden kann, wenn der Leiter mit einem Glimmerband umbandelt wird, das einen Folienträger aus einem über 150°C wärmeschrumpfbaren Polymer aufweist, und das Polymer nach dem Bandieren des Leiters einer Wärmeschrumpfung unterworfen wird.

Durch die Wärmeschrumpfung wird einerseits die Haftung der Isolierung und die Verarbeitbarkeit des isolierten Leiters erheblich verbessert, wobei insbesondere auch beim Einsatz von Blankdrähten selbst ohne Verwendung eines Klebers ein Auftrödeln der Isolierung vermieden werden kann. Andererseits bewirken die Schrumpfkräfte eine Komprimierung des Glimmers und dadurch eine erwünschte Reduzierung der Isolierungsdicke im Vergleich zur reinen Umbandelung mit Glimmerband. Das Verkleben und Schrumpfen hat ferner zur Folge, dass eine weniger zerklüftete Oberfläche erhalten wird und insbesondere die Gefahr von Taschen- und Faltenbildung infolge mechanischer Einflüsse (z.B. Biegung des Leiters) erheblich reduziert wird. Zugleich werden die elektrischen Eigenschaften, insbesondere die Spannungs- und Glimmfestigkeit sowie die Kurz- und Langzeitdurchschlagsspannungsfestigkeit, der Isolierung deutlich verbessert. Beispielsweise wurde gefunden, dass im Vergleich zu herkömmlichen Lackdrähten mit dieser Methode die Lebensdauer bei etwa doppelter Teilentladungseinsetzspannung um einen Faktor von etwa 2000 verbessert werden konnte.

Diese Methode ermöglicht daher Herstellung neuartiger, porenfreier und gewünschtenfalls sehr dünner Glimmerisolierungen mit verbesserten elektrischen Eigenschaften, die sich inbesondere für den Einsatz in elektrischen Niederspannungsmaschinen und/oder den Einsatz von Blankdrähten eignen, aber auch bei anderen elektrotechnischen Anwendungen, wie beispielsweise in elektrischen Maschinen in Hochspannungsausführung oder in Umformern überraschende Vorteile bieten. Infolge der möglichen Verringerung der Isolationsdicke kann zudem auf die in EP-A1-0 822 640 empfohlene Minimierung der Zahl paralleler Drähte und paralleler Zweige ganz oder weitgehend verzichtet werden. Falls eine besonders hohe Wärmebeständigkeit der Isolierung gewünscht ist, kann dies beispeilsweise durch Verwendung eines Folienträgers aus hoch temperaturbeständigen Materialien, z.B. Polyimid, erreicht werden.

Die Erfindung betrifft daher ein Verfahren zum teilentladungsfesten Isolieren eines elektrischen Leiters für Wicklungen von elektrischen Machinen und Umformern mit den Merkmalen des Anspruchs 1.

Das erfindungsgemässe Verfahren eignet sich - wie erwähnt - insbesondere zur Isolierung von Wicklungen von elektrischen Maschinen in Hoch- oder Niederspannungsausführung als auch von Transformatoren. Gemäss einer allgemein gültigen, heute unter Fachleuten verwendeten Definition von Spannungsebenen (Lexikon Elektrotechnik, VCH Verlagsgesellschaft mbH, Weinheim, New York, 1994, S. 625) bezeichnet im Rahmen der vorliegenden Erfindung Hochspannung eine Spannung > 1000 V, während unter Niederspannung Spannungsebenen ≤ 1000 V verstanden werden.

Die Erfindung betrifft daher ebenfalls eine teilentladungsfeste Isolierung elektrischer Leiter für Wicklungen von elektrischen Maschinen und Umformern mit den Merkmalen des Anspruchs 9 sowie einen teilentladungsfesten elektrischen Leiter mit den Merkmalen des Anspruchs 10.

Erfindungsgemäss eignen sich als elektrische Leiter grundsätzlich alle in elektrotechnischen Anwendungen gebräuchlichen Leiter, beispielsweise Rund- oder Flachdrähte in Lack- oder Blankdrahtausführung, die aus üblichen Leitermaterialien wie Kupfer, vernickeltem oder verzinntem Kupfer, Aluminium, Nickel, Supraleitern und dergleichen bestehen und übliche Durchmesser bzw. Querschnitte aufweisen können. Vorzugsweise kann der elektrische Leiter ein Runddraht, typischerweise ein Runddrahte mit einem Durchmesser von etwa 0,6 bis 4 mm, und/oder eine Blankdraht sein.

Glimmerhaltige Isolierstoffbänder, umfassend einen Folienträger aus einem über 150°C wärmeschrumpfbaren Polymer und eine mittels eines Bindemittels an dem Folienträger befestigte Glimmerschicht, sind dem Fachmann grundsätzlich ebenfalls bekannt und in bekannter oder an sich bekannter Weise herstellbar, wobei übliche Glimmerschichten (z.B. Glimmerpapier) und übliche Bindemittel (z.B. Epoxidharze oder Silikonharze) einsetzbar sind. Geeignete Folienträger aus einem über 150°C wärmeschrumpfbaren Polymer, beispielsweise einem Polyester, Poly(ethylenterephthalat), Poly(ethylen-2,6-naphthalindicarboxylat), Polyimid oder Polycarbonat, wurden im Stand der Technik gelegentlich ebenfalls schon eingesetzt, aber dort nicht der erfindungsgemässen Wärmeschrumpfung unterworfen. Erfindungsgemäss sind auch sehr dünne Isolierstoffbänder einsetzbar, wobei typische Banddicken etwa 0,06 bis 0,09 mm betragen können.

Gewünschtenfalls kann die Glimmerschicht des Isolierstoffbandes beidseitig mittels eines Bindemittels an einem Folienträger befestigt sein, wobei vorzugsweise beide Folienträger aus einem über 150°C wärmeschrumpfbaren Polymer bestehen können, d.h. das Isolierstoffband kann auf der vom ersten Folienträger abgewandten Oberfläche der Glimmerschicht einen zweiten Folienträger, vorzugsweise ebenfalls aus einem über 150°C wärmeschrumpfbaren Polymer, aufweisen. Diese Ausführungsform kann beispielsweise beim Einsatz von Blankdrähten von Vorteil sein und/oder, wenn das Isolierstoffband beidseitig mit Kleber beschichtet werden soll.

Gewünschtenfalls kann das Isolierstoffband ein- oder beidseitig mit Kleber, vorzugsweise einem thermohärtenden Schmelzkleber, beschichtet werden, um die Haftung des Bandes auf dem Leiter zusätzlich zu verbessern. Vorzugsweise wird der Kleber auf dem Folienträger bzw. den Folienträgern aufgebracht. Zusätzlich oder anstelle einer Beschichung des Isolierstoffbandes mit Kleber kann gewünschtenfalls auch der elektrische Leiter mit Kleber oder einem polymerisierbaren Lack beschichtet oder ein verbackbarer Lackdraht verwendet werden.

Zur Bandierung des elektrischen Leiters mit dem glimmerhaltigen Isolierstoffband sind grundsätzlich alle üblichen Bandiermethoden geeignet, wie Radialbandierung, Tangentialbandierung, Steilbandierung, Längsbandierung etc. mit allen möglichen Überlappungen (typischerweise etwa 20%-66% Überlappung) oder gestossen. Der Leiter kann mittels manueller oder automatischer Einziehtechnik verarbeitet werden. Die Umbandelung mit Isolierstoffbänder, die nur einen Folienträger aufweisen, erfolgt vorzugsweise so, dass die Glimmeroberfläche auf den Leiter zu liegen kommt, d.h. leiterseitig (innen) angeordnet wird.

Nach erfolgter Bandierung des Leiters wird dieser zwecks Wärmeschrumpfung des Polymers einer Wärmebehandlung bei einer Temperatur über 150°C, vorzugsweise etwa 200 bis 250°C, unterworfen. Dies kann vorzugsweise dadurch erfolgen, dass der Leiter nach der Bandierung durch einen Ofen (z.B. einen Induktionsofen) geführt und im Durchlauf kurzzeitig (z.B. während etwa 2 Minuten) auf die gewünschte Temperatur erhitzt wird. Langandauernde Wärmebehandlungen sollten hingegen insbesondere bei Verwendung von Folienträger aus Polymeren vermieden werden, die keine ausreichende Wärmestabilität aufweisen und daher zerstört werden könnten. Die Wärmeschrumpfung führt in der Regel zu einer signifikanten Verringerung der Banddicke; beispielsweise ergaben Versuchen mit Isolierstoffbänder einer Dicke von 0,06 mm nach der Wärmeschrumpfung eine Bandddicke von 0,045 mm. Die durch die erfindungsgemässe Bandierung und Wärmebehandlung erhaltenen Isolationszunahmen sind abhängig vom verwendeten Isolierstoffband können aber typischerweise etwa 0,16 bis 0,50 mm betragen.

Gewünschtenfalls kann der isolierte Leiter zur Verbesserung der Verarbeitbarkeit und der Gleiteigenschaften in an sich bekannter Weise mit Gleitmitteln, wie Paraffinen oder Wachsen, lubrifiziert werden. Alternativ kann gewünschtenfalls auch eine Überlackierung beispielsweise mit gesättigten Alkydharzen oder polymersierbaren Lacken oder Harzen erfolgen.

Der isolierte Draht kann anschliessend in an sich bekannter Weise auf Spulen gewickelt werden. Weitere Massnahmen wie Nutisolierung, Imprägnierung der Spule etc. können, soweit erforderlich, ebenfalls in an sich bekannter Weise durchgeführt werden.

Die Erfindung wird durch das folgende Beispiel weiter veranschaulicht:

### Beispiel

Ein blanker Kupferdraht mit einem Durchmesser von 1,20 mm wird in eine Bandiermaschine gemäss dem Stand der Technik eingeführt. An einem Bandierkopf wird ein Glimmerband, das eine Dicke von 0,06 mm und eine Bandbreite von 6 mm aufweist und das aus einem 0,025 mm dicken, über 150°C wärmeschrumpfbaren Polyesterfilm und einem 0,035 mm dicken, mittels Epoxidharz am Polyesterfilm befestigten Glimmerpapier besteht und auf dem Polyesterfilm auf der vom Glimmerpapier abgewandten Seite eine Schmelzkleberbeschichtung aufweist, auf den Kupferdraht so aufgebracht, dass die Glimmerseite auf dem Kupfer liegt. Das Glimmerband wird mit einer Zugspannung von 7 N mit einer Überlappung von 25% satt und faltenfrei radialbandiert. Anschliessend wird der Draht in einem Durchlaufofen bei 220°C im Durchlauf 1,5 Minuten wärmebehandelt. Die Wärmebehandlung bewirkt eine Schrumpfung der Folie und ein Verkleben des Bandes an den überlappten Stellen. Nach der Wärmebehandlung weist der Draht eine Isolationszunahme von etwa 0,16-0,19 mm auf und wird in an sich bekannter Weise mit Paraffin lubrifiziert und auf Lieferspulen gewickelt. Die elektrische Durchschlagsspannung im Kugelbad an einem Prüfkörper, bestehend aus einem Wickel um einen Dorndurchmesser entsprechend dem 10-fachen Drahtdurchmesser, muss grösser als 1500 V sein und beträgt im Durchschnitt 2500 V. Für die Teilentladungseinsetzspannung wird ein Wert von 1100 V erhalten.

## Patentansprüche

1. Verfahren zum teilentladungsfesten Isolieren eines elektrischen Leiters für Wicklungen von elektrischen Maschinen und Umformern durch Bandieren mit einem glimmerhaltigen Isolierstoffband, **dadurch gekennzeichnet, dass** zum Bandieren des Leiters ein Isolierstoffband, bestehend aus einem Folienträger aus einem über 150°C wärmeschrumpfbaren Polymer, einer mittels eines Bindemittels an dem Folienträger befestigten Glimmerschicht und gewünachtenfalls einem zweiten, auf der vom ersten Folienträger abgewandten Oberfläche der Glimmerschicht angeordneten und mittels eines Bindemittels an der Glimmerschicht befestigten Folienträger aus einem über 150°C Wärmesehrumpfbaren Polymer, verwendet und der bandierte Leiter zwecks Wärmeschrumpfung des Polymers einer Wärmebehandlung bei einer Temperatur über 150°C unterworfen wird.

2. Verfahren nach Anspruch 1, **dadurch gekennzeichnet, dass** der elektrische Leiter ein Runddraht ist.

3. Verfahren nach Anspruch 1 oder 2, **dadurch gekennzeichnet, dass** der elektrische Leiter ein Blankdraht ist.

4. Verfahren nach einem der Ansprüche 1 bis 3, **dadurch gekennzeichnet, dass** die Glimmerschicht des Isolierscoffbandes beidseitig mittels eines Bindemittels an einem Folienträger aus einem über 150°C wärmeschrumpfbaren Polymer befestigt ist.

5. Verfahren nach einem der Ansprüche 1 bis 4, **dadurch gekennzeichnet, dass** das wärmeschrumpfbare Polymer ein Polyester, Poly(ethylenterephthalat), Poly(ethylen-2,6-naphthalindicarboxylat), Polyimid oder Polycarbonat ist.

6. Verfahren nach einem der Ansprüche 1 bis 5, **dadurch gekennzeichnet, dass** das Isolierstoffband ein- oder beidseitig mit Kleber beschichtet ist.

7. Verfahren nach einem der Ansprüche 1 bis 6, **dadurch gekennzeichnet, dass** das Isolierstoffband eine Banddicke von 0,06-0,09 mm aufweist.

8. Verfahren nach einem der Ansprüche 1 bis 7, **dadurch gekennzeichnet, dass** die durch das Isolierstoffband bedingte Isolationszunahme nach der Wärmebehandlung 0,16 bis 0,50 mm beträgt.

9. Teilentladungsfeste Isolierung elektrischer Leiter für Wicklungen von elektrischen Maschinen und Umformern, **dadurch gekennzeichnet,**
**dass** die Wicklung aus an sich bekannten elektrischen Leitern besteht,
**dass** diese Leiter mit einer Umbandelung aus glimmerhaltigem Isolierstoffband versehen sind, und
**dass** dieses Isolierstoffband aus einem wärmegeschrumpften Folienträger aus einem über 150°C wärmeschrumpfbaren Polymer, einer mittels eines Bindemittels an dem Folienträger befestigten Glimmerschicht und gewünschtenfalls einem zweiten, auf der vom ersten Folienträger abgewandten Oberfläche der Glimmerschicht angeordneten und mittels eines Bindemittels an der Glimmerschicht befestigten wärmegeschrumpften Folienträger aus einem über 150°C wärmeschrumpfbaren Polymer besteht.

10. Teilentladungsfester elektrischer Leiter für Wicklungen von elektrischen Leitern von elektrischen Maschinen und Umformern, **dadurch gekennzeichnet,**
**dass** die Wicklung aus an sich bekannten elektrischen Leitern besieht,
**dass** diese Leiter mit einer Umbandelung aus glimmerhaltigem Isolierstoffband versehen sind und
**dass** dieses Isolierstoffband aus einem wärmegeschrumpften Folienträger aus einem über 150°C wärmeschrumpfbaren Polymer, einer mittels eines Bindemittels an dem Folienträger befestigten Glimmerschicht und gewünschtenfalls einem zweiten, auf der vom ersten Folienträger abgewandten Oberfläche der Glimmerschicht angeordneten und mittels eines Bindemittels an der Glimmerschicht befestigten wärmegeschrumpften Folienträger aus einem über 150°C wärmeschrumpfbaren Polymer besteht.

## Claims

1. A method of insulating an electrical conductor for windings of electrical machines and transformers in such a way that no partial discharges are produced by taping with a micaceous insulating tape, which method is **characterized in that** an insulating tape consisting of a film support of a polymer which can be heat-shrunk above 150°C, of a layer of mica fastened to the film support by means of a binder and, if desired, of a second film support of a polymer which can be heat-shrunk above 150°C, arranged on the surface of the layer of mica facing away from the first film support, and fastened to the layer of mica by means of a binder, is used for taping the conductor, and the taped conductor is subjected to a heat treatment at a temperature above 150°C for the purpose of heat-shrinking the polymer.

2. The method as claimed in claim 1, **characterized in that** the electrical conductor is a round wire.

3. The method as claimed in claim 1 or 2, **characterized in that** the electrical conductor is a bare wire.

4. The method as claimed in one of claims 1 to 3, **characterized in that** the layer of mica of the insulating tape is fastened on both sides by means of a binder to a film support of a polymer which can be heat-shrunk above 150°C.

5. The method as claimed in one of claims 1 to 4, **characterized in that** the heat-shrinkable polymer is a polyester, poly(ethyleneterephthalate), poly-(ethylene-2,6-naphthalene dicarboxylate), polyimide or polycarbonate.

6. The method as claimed in one of claims 1 to 5, **characterized in that** the insulating tape is coated on one or both sides with adhesive.

7. The method as claimed in one of claims 1 to 6, **characterized in that** the insulating tape has a tape thickness of 0.06-0.09 mm.

8. The method as claimed in one of claims 1 to 7, **characterized in that** the increase in insulation brought about by the insulating tape after the heat treatment is 0.16 to 0.50 mm.

9. An insulation of electrical conductors that does not produce partial discharges for windings of electrical machines and transformers, **characterized**
**in that** the winding consists of electrical conductors known per se,
**in that** these conductors are provided with a taping of micaceous insulating tape, and
**in that** this insulating tape consists of a heat-shrunk film support of a polymer which can be heat-shrunk above 150°C, of a layer of mica fastened to the film support by means of a binder and, if desired, of a second, heat-shrunk film support of a polymer which can be heat-shrunk above 150°C, arranged on the surface of the layer of mica facing away from the first film support, and fastened to the layer of mica by means of a binder.

10. An electrical conductor that does not produce partial discharges for windings of electrical conductors of electrical machines and transformers, **characterized**
**in that** the winding consists of electrical conductors known per se,
**in that** these conductors are provided with a taping of micaceous insulating tape and
**in that** this insulating tape consists of a heat-shrunk film support of a polymer which can be heat-shrunk above 150°C, of a layer of mica fastened to the film support by means of a binder and, if desired, of a second, heat-shrunk film support of a polymer which can be heat-shrunk above 150°C, arranged on the surface of the layer of mica facing away from the first film support and fastened to the layer of mica by means of a binder.

## Revendications

1. Procédé pour l'isolation résistant aux décharges partielles d'un conducteur électrique pour des bobines de machines et de transformateurs électriques en l'entourant avec une bande d'isolant contenant du mica, **caractérisé en ce qu'**on utilise pour entourer le conducteur une bande d'isolant constituée d'un support en forme de feuille en un polymère thermorétractable au-dessus de 150°C, d'une couche de mica fixée au moyen d'un liant au support en forme de feuille et, si souhaité, d'un deuxième support en forme de feuille en un polymère thermorétractable au-dessus de 150°C, disposé sur la surface de la couche de mica opposée au premier support en forme de feuille et fixé sur la couche de mica au moyen d'un liant et le conducteur entouré d'une bande est soumis à un traitement thermique à une température supérieure à 150°C afin de procéder au retrait thermique du polymère.

2. Procédé selon la revendication 1, **caractérisé en ce que** le conducteur électrique est un fil rond.

3. Procédé selon la revendication 1 ou 2, **caractérisé en ce que** le conducteur électrique est un fil nu.

4. Procédé selon l'une quelconque des revendications 1 à 3, **caractérisé en ce que** la couche de mica de la bande d'isolant est fixée des deux côtés au moyen d'un liant à un support en forme de feuille en un polymère thermorétractable au-dessus de 150°C.

5. Procédé selon l'une quelconque des revendications 1 à 4, **caractérisé en ce que** le polymère thermorétractable est un polyester, un poly(téréphtalate d'éthylène), un poly(2,6-naphtalènedicarboxylate d'éthylène), un polyimide ou un polycarbonate.

6. Procédé selon l'une quelconque des revendications 1 à 5, **caractérisé en ce que** la bande d'isolant est revêtue d'un adhésif d'un côté ou des deux côtés.

7. Procédé selon l'une quelconque des revendications 1 à 6, **caractérisé en ce que** la bande d'isolant présente une épaisseur de bande de 0,06 à 0,09 mm.

8. Procédé selon l'une quelconque des revendications 1 à 7, **caractérisé en ce que** l'augmentation d'isolation provoquée par la bande d'isolant après le traitement thermique est de 0,16 à 0,50 mm.

9. Isolation résistant aux décharges partielles de conducteurs électriques pour des bobines de machines et de transformateurs électriques, **caractérisée en ce que** la bobine est constituée de conducteurs électriques connus en soi, **en ce que** ces conducteurs sont entourés d'une bande d'isolant contenant du mica et **en ce que** cette bande d'isolant est constituée d'un support thermorétracté en forme de feuille en un polymère thermorétractable au-dessus de 150°C, d'une couche de mica fixée au moyen d'un liant au support en forme de feuille et, si souhaité, d'un deuxième support thermorétracté en forme de feuille en un polymère thermorétractable au-dessus de 150°C, disposé sur la surface de la couche de mica opposée au premier support en forme de feuille et fixé sur la couche de mica au moyen d'un liant.

10. Conducteur électrique résistant aux décharges partielles pour des bobines de conducteurs électriques de machines et de transformateurs électriques, **caractérisé en ce que** la bobine est constituée de conducteurs électriques connus en soi, **en ce que** ces conducteurs sont entourés d'une bande d'isolant contenant du mica et **en ce que** cette bande d'isolant est constituée d'un support thermorétracté en forme de feuille en un polymère thermorétractable au-dessus de 150°C, d'une couche de mica fixée au moyen d'un liant au support en forme de feuille et, si souhaité, d'un deuxième support thermorétracté en forme de feuille en un polymère thermorétractable au-dessus de 150°C, disposé sur la surface de la couche de mica opposée au premier support en forme de feuille et fixé sur la couche de mica au moyen d'un liant.
